Europäisches Patentamt

European Patent Office

Office européen des brevets

(11) Publication number: **0 377 511 B1**

## EUROPEAN PATENT SPECIFICATION

(45) Date of publication of patent specification: **07.12.94**

(21) Application number: **90300096.6**

(22) Date of filing: **04.01.90**

(51) Int. Cl.⁵: **C08L 77/00**, C08L 35/06, //(C08L77/00,35:06),(C08L35/06, 77:00)

The file contains technical information submitted after the application was filed and not included in this specification

(54) Impact resistant polyblends of polyamides, anhydride copolymers and functionalized elastomers.

(30) Priority: **06.01.89 US 295078**

(43) Date of publication of application:
**11.07.90 Bulletin 90/28**

(45) Publication of the grant of the patent:
**07.12.94 Bulletin 94/49**

(84) Designated Contracting States:
**BE DE ES FR GB IT NL**

(56) References cited:
EP-A- 0 232 879
EP-A- 0 277 381
DE-A- 3 534 088

(73) Proprietor: **ARCO Chemical Technology, L.P.
Two Greenville Crossing
4001 Kennett Pike, Suite 238
Greenville, Delaware 19807 (US)**

(72) Inventor: **Rosenthal, Jay Scott
193 Benjamin Drive
West Chester, PA 19382 (US)**

(74) Representative: **Cropp, John Anthony David et al
MATHYS & SOUIRE
10 Fleet Street
London, EC4Y 1AY (GB)**

Rank Xerox (UK) Business Services
(3.10/3.09/3.3.3)

**Description**

BACKGROUND OF THE INVENTION

This invention is directed to multi-phase polyblends of a polyamide resin, a high molecular weight thermoplastic copolymer containing an unsaturated carboxylic acid anhydride,and an adduct of a carboxylic acid anhydride and an elastomeric polymer. The invention additionally relates to a method for the preparation of such thermoplastic moldable polymer blends wherein chemical grafting of the blend components is accomplished.

Polyamide resins have been widely used as thermoplastics in molding applications because of their high resistance to chemicals, heat, and abrasion and their generally good mechanical properties. However, polyamide resins possess certain deficiencies, including shrinkage during molding and high hygroscopicity. The tendency to absorb water results in dimensional stability problems and loss of mechanical strength. Although polyamide resins are fairly tough under most impact conditions, they can be notch-sensitive and brittle at low temperatures. Polyamide resins have been blended with other polymers to compensate for these deficiencies or to enhance mechanical properties such as stiffness and tensile strength.

U.S. Pat. No. 4,528,326 teaches polyblends of polyamide resins having at least seven methylene units separating each amide functional group and rubber-modified styrene/unsaturated carboxylic acid anhydride or imide copolymer resins. Polyblends of polyamides containing fewer than seven methylene units were found to have undesirably low impact strength.

Jpn. Pat. No. 56-112957 teaches polyblends of polyamide resins and rubber-modified styrene copolymer containing high levels of unsaturated carboxylic acid anhydride, with the styrene copolymer preferably also containing an unsaturated carboxylic acid ester in order to minimize the extent of undesired cross-linking during melt-kneading.

U.S. Pat. No. 4,421,892 contains similar teachings regarding polyblends of polyamide resins and styrene copolymers containing high levels of unsaturated carboxylic acid anhydride. Good mechanical strength was only achieved in such polyblends when an unsaturated carboxylic acid ester was additionally present in the styrene copolymer.

Jpn. Pat. No. 57-025355 teaches blends of styrene/maleic anhydride copolymers and polyamides, but does not teach how adequate impact properties may be accomplished with such blends.

Ger. Pat. No. 3,604,348 teaches blends of polyamides, ethylene/acrylate or acrylic acid copolymers, and styrene/acrylic acid or styrene/anhydride copolymers. Similar teachings are found in Ger. Pat. No. 3,604,376 which additionally discloses the use of a conjugated diene polymer or copolymer to improve the impact strength of such blends.

U.S. Pat. No. 4,174,358 teaches the toughening of polyamides by blending with elastomeric polymers bearing functional groups, including anhydride, which may chemically react with the polyamide so as to achieve grafting between the components.

U.S. Pat. No. 4,427,828 teaches the impact modification of polyamides with maleic anhydride adducts of either a hydrogenated polymer of a conjugated diene or a hydrogenated block or random copolymer of a copolymer of a conjugated diene and a monovinyl aromatic monomer.

SUMMARY OF THE INVENTION

In contrast to this prior art, the multi-phase polyblends of polyamides and styrene copolymers which have an excellent balance of properties and are obtained without the use of an unsaturated carboxylic acid ester as a third comonomer in the styrene copolymer or a limitation on the type of polyamide resin employed.

The multi-phase polyblends of the present invention exhibit superior stiffness and impact strength and less absorption of moisture relative to the unblended polyamide resins. At the same time, these polyblends retain the other desirable properties of the polyamide resins, including tensile strength, end-use temperature, and chemical and abrasion resistance.

It is an object of this invention to obtain moldable multi-phase polyblends based on polyamide and having high mechanical strength, high stiffness, high heat distortion temperatures, low moisture absorption, and good impact strength.

It is a further object of the invention to improve the impact properties of blends of polyamides and styrene/unsaturated carboxylic acid anhydride copolymers while maintaining a high degree of resistance to oxidative degradation.

EP-A-0277381 teaches the preparation of polymer compositions having excellent thermal stability combined with good impact resistance, good processability and improved weather resistance and UV-resistance by combining a rubber grafted with a styrene/acrylonitrile copolymer, a copolymer of a vinyl aromatic compound and maleic anhydride, a polyamide and a flexible ethylene polymer with acid or anhydride groups in the side chains. However, it is stated that the advantages of the copolymer of the vinyl aromatic compound and the maleic anhydride are practically non-existent if it contains less than 15 weight percent of the anhydride.

Japanese Kokai No. 86249/88 teaches that the molding workability and impact resistance of polyphenylene ethers may be improved by melt-mixing these polymers with a polyamide or polyester, a styrene resin modified by at least one of a carboxyl group, acid anhydride group, epoxy group, hydroxyl group and amino group, and an impact-resistant reinforcing agent likewise modified by at least one of the aforementioned groups.

According to this invention, there is provided a moldable thermoplastic polymer blend comprising: (A) from 9 to 94 weight percent of a polyamide having a number average molecular weight of at least 8,000 (B) from 5 to 90 weight percent of a thermoplastic copolymer of from 1 to 10 weight percent based on thermoplastic copolymer of an $\alpha,\beta$-unsaturated carboxylic acid anhydride and from 90 to 99 weight percent based on thermoplastic copolymer of an unsaturated monomer selected from monovinyl aromatic monomers and unsaturated nitriles, said thermoplastic copolymer having a number average molecular weight of at least 30,000; and (C) from 1 to 30 weight percent of an $\alpha,\beta$-ethylenically unsaturated carboxylic acid anhydride-functionalized elastomer comprising an adduct of an $\alpha,\beta$-unsaturated carboxylic acid anhydride and an elastomeric polymer selected from (a) a random copolymer of ethylene, at least one $C_3$ to $C_6$ $\alpha$-olefin, and at least one nonconjugated diene; (b) a block copolymer wherein at least two blocks consist essentially of recurring units of at least one monovinyl aromatic monomer and at least one other block consists essentially of recurring units of at least one conjugated diene, and wherein said other block is substantially hydrogenated such that the unsaturation level of said other block due to the units of non-conjugated diene therein is less than 20 percent of the original unsaturation level; (c) a substantially random copolymer of at least one monovinyl aromatic monomer and at least one conjugated diene, wherein said random copolymer is substantially hydrogenated such that the unsaturation level of said random copolymer is less than 20 percent of the original unsaturation level; and (d) a polymer of at least one conjugated diene, wherein said polymer is substantially hydrogenated such that the unsaturation level of said polymer is less than 20 percent of the original unsaturation level; wherein said polyamide is chemically grafted to said thermoplastic copolymer and said functionalized elastomer.

In one preferred embodiment said polyamide (A) is nylon 6,6 and is present in an amount of from 24 to 79 weight percent of the blend; said thermoplastic copolymer (B) comprises from 1 to 10 weight percent of maleic anhydride and from 90 to 99 weight percent of styrene and is present in an amount of from 20 to 75 weight percent of the blend; and said functionalized elastomer (C) is an adduct of maleic anhydride and an elastomeric polymer selected from

(a) random copolymers of ethylene, propylene, and at least one non-conjugated diene selected from of 1,4 hexadiene, 5-ethylidene-2-norbornene, and dicyclopentadiene;

(b) block copolymers wherein at least two blocks consist essentially of recurring units of styrene and at least one other block consists of recurring units of butadiene, and wherein said other block is substantially hydrogenated such that the unsaturation level of said other block due to the units of conjugated diene therein is less than 20 percent of the original unsaturation level;

(c) random copolymers of styrene and butadiene, wherein said random copolymer is substantially hydrogenated such that the unsaturation level of said random copolymer is less than 20 percent of the original unsaturation level; and

(d) polymers of butadiene, wherein said polymer is Substantially hydrogenated such that the unsaturation level of said polymer is less than 20 percent of the original unsaturation level; and said functionalized elastomer is present in an amount of from 1 to 30 percent by weight of the blend.

## DESCRIPTION OF THE PREFERRED EMBODIMENTS

The moldable multi-phase polyblends of this invention are tough rigid thermoplastics having a fine dispersion microstructure observable by electron microscopy. The compositions of the continuous and disperse phases depend on the relative amounts of the thermoplastic copolymers employed. The disperse phase when viewed by electron microscopy appears as particles of extremely small average diameter. It is preferred that the average diameter of the particles be as small as possible, with the preferred diameter being less than 5 microns. Most preferably, the particle diameter is less than 2 microns. The particle size of the disperse phase is much smaller than would be expected from the large difference in solubility parameter between the individual components of the polyblend.

Without wishing to be bound by any particular theory, it is believed that partial miscibility or compatibilization of the polyamide and thermoplastic copolymer, resulting in the excellent overall balance of properties possessed by the polyblends, is achieved by chemical reaction of the amine end-groups of the polyamide with the anhydride functionality of the thermoplastic copolymer. The polyamide may undergo limited degradation and chain scission during blending to create additional amine groups available for reaction with the anhydride functionality. The chemical reaction is thought to yield a graft copolymer in which polyamide segments appear as side-chains on a backbone of thermoplastic copolymer.

The superior impact properties of the polyblends of this invention, as compared to blends of polyamides and styrene/anhydride copolymers alone, are believed to be due to chemical reaction of the amine groups of the polyamide with the carboxylic acid anhydride groups of the functionalized elastomer. The compatibilization which results from this grafting helps to ensure that the elastomeric polymer is well-dispersed throughout the polyblend matrix and is at least partially compatibilized with the matrix, thereby functioning effectively as an impact modifier.

However, it is to be understood that the polyblends of this invention can include not only the graft copolymers described above, but also varying amounts of ungrafted polyamide, ungrafted functionalized elastomer, and ungrafted thermoplastic copolymer. The relative amounts of the graft copolymer, unreacted polyamide resin, and unreacted thermoplastic copolymer will depend on the component molecular weights, the chemical composition of the components, and blending temperature and shear rate, among other factors. In general, however, it is desirable to achieve a high proportion of the graft copolymer in the blend.

The polyamide resin may constitute from 9 to 94 weight percent, more preferably from 20 to 85 weight percent, of the total polyblend of this invention. Any polyamide is suitable for use in the practice of this invention, provided it has a number average molecular weight of at least 8,000. It is preferred that the polyamide have an average of at least 0.5 amine end-group per chain. The preferred molecular weight range is from 10,000 to 40,000. Suitable polyamides include nylon-6, nylon-6,6, nylon-6,9, nylon-6,10, nylon-6,12, nylon-11, nylon-12 and mixtures thereof. Nylon-6,6, obtained from hexamethylene diamine and adipic acid monomer constituents, is a preferred polyamide resin. The polyamide resins may be prepared by any of the methods familiar to those skilled in the art, including the condensation of diamines and diacid chlorides, the condensation of diamines and dicarboxylic acids, and the ring-opening polymerization of lactams.

The polyblends of this invention are comprised of from 5 to 90 weight percent, preferably 15 to 80 weight percent, of a thermoplastic copolymer. The thermoplastic copolymer contains from about 1 to 10 weight percent of an unsaturated carboxylic acid anhydride.

Examples of unsaturated carboxylic acid anhydrides suitable for incorporation into the thermoplastic copolymer component of the invention include itaconic anhydride, citraconic anhydride, ethyl maleic anhydride, methyl itaconic anhydride, chloromaleic anhydride, bromomaleic anhydride, tetrahydrophthalic anhydride, and their mixtures. A preferred unsaturated carboxylic acid anhydride is maleic anhydride. The thermoplastic copolymer contains from 1 to 10 weight percent of the unsaturated carboxylic acid anhydride as optimum properties, particularly impact strength, are obtained at these relatively low levels of anhydride. The presence of greater amounts of anhydride tends to result in cross-linking, lower mechanical strength, and poorer impact properties.

The thermoplastic copolymer is additionally comprised of at least one other unsaturated monomer copolymerizable with the unsaturated carboxylic acid anhydride. Suitable comonomers include monovinyl aromatic monomers such as styrene, alpha-methylstyrene, ethylstyrene, isopropylstyrene, tert-butylstyrene, vinyl naphthalene, and their mixtures. Styrene is the preferred comonomer. Unsaturated nitriles may also be used as comonomers, including acrylonitrile and methacrylonitrile. Unsaturated carboxylic acid imide derivatives such as n-phenylmaleimide are also useful as comonomers. In contrast to the unsaturated carboxylic acid anhydride monomers, the imide derivatives do not appear to chemically react with the polyamide resin component when incorporated into the thermoplastic copolymer of this invention. Good compatibilization, small disperse particle size, and good impact properties are not achieved if the thermoplastic copolymer contains imide but not anhydride. However, the presence of imide together with anhydride can improve certain properties of the final polyblend, such as stiffness and heat distortion temperature.

The preferred thermoplastic copolymers of this invention are styrene/maleic anhydride copolymers containing from 1 to 10 weight percent anhydride. Particularly suitable for use are the high molecular weight copolymers of styrene and maleic anhydride designated DYLARK® copolymers, commercially available from ARCO Chemical Company.

The thermoplastic copolymers may be prepared by any of the several methods available for their synthesis. For example, the copolymers may be obtained by solution copolymerization directly from the respective monomers by the incremental addition of the reactive monomer as taught by U.S. Pat. No. 2,971,939 or by a continuous recycle polymerization process described in U.S. Pat. Nos. 2,769,804 and 2,989,517. Alternatively, a suspension polymerization process as taught in U.S. Pat. No. 3,509,110 may be employed. The teachings of all these patents are incorporated herein by reference. The number average molecular weight of the thermoplastic copolymer is at least 30,000, and preferably is less than 500,000.

The thermoplastic copolymer can be impact-modified using any art-recognized method of incorporating one or more rubber impact modifiers. Typically, such impact modifiers are polymers which are elastomeric in nature and which have glass transition temperatures below 0°C. Examples of suitable impact modifiers include butadiene rubber, butadiene-styrene rubber, isoprene rubber, isoprene-styrene rubber, and block copolymers of butadiene-styrene. Preferably, the impact modifiers are incorporated into the thermoplastic copolymer monomer mixture prior to polymerization using, for example, the methods of U.S. Pat. No. 4,097,551.

The use of thermoplastic copolymer which is impact-modified is optional, as the impact properties of the polyblends of this invention are influenced more by the amount and type of functionalized elastomer used. It is preferred that the thermoplastic copolymer contain between 2 and 25 weight percent rubber if it is rubber-modified.

The functionalized elastomer may constitute from 1 to 30 weight percent of the total polyblend of the invention, with 10 to 20 weight percent being the preferred range.

In the broadest sense, the functionalized elastomers suitable for use in the moldable polyblends of this invention are relatively soft, rubber-like polymers containing at least one pendent carboxylic acid anhydride group per polymer chain which provides a potential grafting site for reaction with a polyamide amine end-group. The anhydride group is preferably pendent and not incorporated as a monomer unit in the backbone of the elastomeric polymer. To function effectively as an elastomer, this component should have a glass transition temperature less than 0°C; more preferably, the glass transition temperature should be less than -40°C. The molecular weight of the functionalized elastomer should be sufficiently high so as to provide adequate elastomeric properties. In most instances, the number average molecular weight will preferably be above 30,000. The functionalized elastomers should contain a minimum of cross-linking or gel in order to facilitate processing of the polyblends of this invention. Some degree of branching may be desirable, however.

A particular advantage of this invention is that the functionalized elastomers used contain relatively low levels of unsaturation, as compared to, for example, elastomers containing substantial amounts of butadiene. The presence of low levels of unsaturation results in the polyblends of this invention having excellent weather resistance, particularly with respect to oxidation.

The $\alpha,\beta$-unsaturated carboxylic acid anhydrides suitable for use in preparing the adducts to be used in the polyblends of this invention are those anhydrides which may be grafted onto the random copolymer to provide amine-reactive functional groups. A particularly preferred anhydride is maleic anhydride. It is desirable that the anhydride constitute from 0.5 to 5 weight percent of the adduct.

In one embodiment, the functionalized elastomer may be an adduct of an $\alpha,\beta$-unsaturated carboxylic acid anhydride and a random copolymer of ethylene, at least one $C_3$ to $C_6$ $\alpha$-olefin, and at least one nonconjugated diene. This type of random terpolymer is the type generally referred to in the art as "EPDM" rubber. The $\alpha$-olefin is preferably propylene, for reasons of availability, but may also be 1-butene, 1-pentene, 1-hexene or mixtures thereof. The nonconjugated diene suitable for use in preparing the random copolymer may be a linear aliphatic diene of at least six carbon atoms which has either two terminal double bonds or one terminal double bond and one internal double bond. Alternatively, the nonconjugated diene maybe a cyclic diene wherein one or both of the double bonds are part of a carbocyclic ring. The structure of the copolymer may be altered as desired, particularly with respect to branching, by the selection of particular nonconjugated dienes as is well known to those skilled in the art. Particularly preferred nonconjugated dienes include 1,4-hexadiene, dicyclopentadiene, and 5-ethylidene-2-norbornene.

In this embodiment, it is preferred that the random copolymer contain from 40 to 90 mole percent ethylene and 0.1 to 7.5 mole percent nonconjugated diene, with the remainder being propylene.

The adducts of $\alpha,\beta$-unsaturated carboxylic acid anhydrides and random copolymers of ethylene, at least one $C_3$ to $C_6$ $\alpha$-olefin, and at least one nonconjugated diene which are suitable for use in the polyblends of this invention may be prepared by any of the methods well-known to those skilled in the art. U.S. Pat. Nos. 3,884,882 and 4,010,223, teach the preparation of such adducts by thermally reacting maleic anhydride and EPDM type rubbers. Examples of suitable functionalized elastomers of this type are Uniroyal ROYALTUF® 465 and Uniroyal ROYALTUF® 465A, which are maleated-EPDM rubbers containing about 1.2 and 0.7 weight percent maleic anhydride.

In another embodiment, the functionalized elastomer is an adduct of an $\alpha,\beta$-unsaturated carboxylic acid anhydride and a hydrogenated block copolymer wherein at least two blocks consist essentially of recurring units of at least one monovinyl aromatic monomer and at least one other block consists essentially of recurring units of a conjugated diene. The monovinyl aromatic monomer is most preferably styrene, but may be any other similar monomer such as $\alpha$-methylstyrene, p-methylstyrene, p-ethylstyrene, p-tert-butyl styrene or p-chlorostyrene. Suitable conjugated dienes include butadiene and isoprene.

The 1,2-microstructure content of the conjugated diene block may be from 7 to 100%. The block copolymer may contain up to 60 percent by weight of monovinyl aromatic monomer; higher monovinyl aromatic monomer content may yield block copolymers which are not sufficiently elastomeric.

The block copolymer is hydrogenated in order to reduce the level of unsaturation due to the conjugated diene block to less than 20 percent of the original value before hydrogenation. As discussed previously, the low levels of unsaturation provide the final polyblend with a high degree of resistance toward oxidative degradation.

The blocks of recurring monovinyl aromatic monomer units constitute relatively hard segments having a glass transition temperature or melting temperature above ambient while the block of conjugated diene is a relatively soft rubbery segment having a glass transition temperature below ambient. The block copolymer is thus a thermoplastic elastomer.

The adducts of $\alpha,\beta$-unsaturated carboxylic acid anhydrides and hydrogenated block copolymers of monovinyl aromatic compounds and conjugated dienes suitable for use as functionalized elastomers in the polyblends of this invention may be prepared by any of the methods known in the art. U.S. Pat. No. 4,427,828 teaches the preparation of such adducts by thermally grafting the anhydride onto the hydrogenated block copolymer using an "ene"-type reaction. U.S. Pat. No. 4,578,429 teaches that similar adducts may also be obtained by free radical induced grafting. In this method, the resulting adducts are more thermally stable than the adducts of U.S. Pat. No. 4,427,828 due to the type of grafting which occurs. In addition, the functionalized hydrogenated block copolymers produced by free radical grafting may contain even lower levels of unsaturation since the presence of double bonds in the block copolymer is not required by this type of grafting mechanism. Kraton® FG1901X, a maleated block copolymer sold commercially by Shell which contains ca. 2 wt. % maleic anhydride, is an example of a suitable functionalized elastomer of this type. Such materials are sometimes referred to as functionalized styrene-ethylene/1-butene-styrene (S-E/B-S) rubbers, as the structure of the butadiene center block after hydrogenation resembles that of an ethylene/1-butene copolymer.

In another embodiment of this invention, the functionalized elastomer is an adduct of an $\alpha,\beta$-unsaturated carboxylic acid anhydride and a hydrogenated random copolymer of at least one monovinyl aromatic monomer and at least one conjugated diene. Styrene is the preferred monovinyl aromatic monomer and preferably does not represent more than 60 mole percent of the random copolymer in order that the glass transition temperature not be increased past the point at which the random copolymer would no longer function effectively as an elastomer. Other monovinyl aromatic monomers may be employed, however, including $\alpha$-methyl styrene, o- or p-methylstyrene, p-tert-butylstyrene, p-chlorostyrene, vinyl naphthalene, and the like or mixtures thereof. Suitable conjugated dienes include 1,3-butadiene, isoprene, 1,3-pentadiene, 2,3-dimethyl-1,3-butadiene and similar compounds, with 1,3-butadiene being the preferred diene. The random copolymer is hydrogenated to lower the unsaturation level to less than 20 percent of the original value. The 1,2-microstructure content of the random copolymers prior to hydrogenation can vary from 10 to 100 percent. The preparation of adducts of this type is taught in U.S. Pat. No. 4,427,828, which teaches that random copolymers of conjugated dienes and monovinyl aromatic monomers may be functionalized with $\alpha,\beta$-unsaturated carboxylic acid anhydrides in a thermal "ene"-type reaction. Other methods of preparing such adducts will be well-known to those skilled in the art.

In yet another embodiment of this invention, a functionalized elastomer is employed which is an adduct of an $\alpha,\beta$-unsaturated carboxylic acid anhydride and a hydrogenated polymer of at least one conjugated diene. The diene polymer is hydrogenated to an extent such that less than 20 percent of the original unsaturation remains. The diene may be any hydrocarbon containing two conjugated double bonds such as 1,3-butadiene, which is the preferred diene. Examples of other suitable dienes include isoprene, 2,3-dimethyl-1,3-butadiene, 1,3-pentadiene, and the like. Mixtures of dienes may also be employed. Polymers of conjugated dienes which may be utilized include those containing prior to hydrogenation a total of 0.1 to 100 percent 1,2- and 3,4-microstructure content and 0.1 to 99 percent 1,4-microstructure. It is preferred that the 1,2-microstructure content be from 40 to 60 percent. "Ene"-type thermal grafting may be used to form adducts of this type, as described in U.S. Pat. No. 4,427,828. Other synthetic routes to such adducts will be apparent to those familiar with the art.

6

EP 0 377 511 B1

The moldable multi-phase polyblends of this invention can be prepared by blending in the melt from 9 to 94 weight percent of a polyamide resin, from 5 to 90 weight percent of a thermoplastic copolymer containing 1 to 10 weight percent unsaturated carboxylic acid anhydride, and 1 to 30 weight percent of an anhydride functionalized elastomer. The blending is carried out under conditions which promote chemical grafting of the polyamide resin onto the thermoplastic copolymer through the anhydride groups of the copolymer and functionalized elastomer. Intimate and thorough mixing is thus preferred. The melt-blending can be effected using a conventional melt-kneading or compounding apparatus for resins such as a kneader, Banbury mixer, or twin or single screw extruder. The blending may be carried out at a temperature of between 240°C and 330°C, preferably 260°C to 310°C. Higher temperatures may result in excessive decomposition, while the desired degree of grafting may not be realized at lower temperatures. It is preferred to carry out the blending under vacuum in order to remove the water formed during imidization of the anhydride groups in the thermoplastic copolymer and the functionalized elastomer.

The multi-phase polyblends of this invention may additionally include additives such as heat or light stabilizers, antioxidants, pigments, anti-static agents or fillers such as glass or carbon fibers. The polyblends may be employed in any application for which thermoplastic resins are normally used, including extrusion molding or blow molding.

The following examples are meant to illustrate, but not limit, the invention. The evaluation of material properties was performed based on the following ASTM standard tests: flexural strength and modulus (D-790), tensile strength (D-638), notched Izod (D-256), DTUL (deflection temperature under load at 264 psi, D-648), and penetration impact (D-3763).

EXAMPLES 1 and 2 and Comparative Example 3

To illustrate the preparation of the multi-phase polyblends of this invention, copolymers of styrene and maleic anhydride containing from 6 to 13 weight percent anhydride and from 0 to 20 weight percent butadiene-based rubber modifier were blended with ZYTEL® 101, a crystalline unmodified nylon-6,6 sold by E.I. duPont de Nemours & Company, and Uniroyal ROYALTUF® 465A, a maleated -EPDM rubber containing about 0.7% maleic anhydride. The nylon was dried prior to extrusion if it had been sampled from an opened bag. The rubber-modified styrene/MA copolymers were prepared as described in U.S. Pat. No. 4,097,551. The materials used were melt blended in a two stage, single screw Egan extruder under vacuum at screw temperatures of 277-295°C. The pelletized blends were then dried in an oven and injection molded on a two stage, 28.4g (5 oz.) Reed machine into an ASTM family mold at a melt temperature of 277-293°C. The mold temperature was 60°C. The molded samples were kept dry using a nitrogen purge prior to testing; all properties thus reflect dry, as-molded properties.

As shown by the test data in Table I, all three blends possessed an excellent overall balance of properties, particularly with respect to the impact properties as measured by notched Izod and penetration impact. In general, better impact properties were achieved using styrene/maleic anhydride copolymers according to the invention, that is with the lower levels of anhydride (Examples 1 and 2). Surprisingly, the impact properties were not particularly influenced by the level of butadiene-based impact modifier present in the styrene/MA copolymer before blending. This indicates that the presence of the X465A functionalized elastomer is primarily responsible for the good impact properties obtained.

COMPARATIVE EXAMPLE 4

To demonstrate that the impact properties of the polyblends of this invention are superior to those of the unblended polyamide component alone, ZYTEL® 101 was injection molded using the procedure described.in Examples 1-3. The notched Izod and penetration impact values observed (Table I) were considerably lower for the unblended polyamide than for the polyblends of this invention.

COMPARATIVE EXAMPLES 5 AND 6

To demonstrate that good impact properties cannot be achieved in the absence of an anhydride-functionalized elastomer, ZYTEL® 101 was blended with rubber modified styrene/maleic anhydride copolymers using the same procedure described for examples 1-3. The notched Izod and penetration impact values obtained for these blends were very low, as shown by the data of Table I, even though both of the styrene/MA copolymers contained butadiene-based impact modifiers.

7

COMPARATIVE EXAMPLE 7

To demonstrate that the polyblends of this invention have properties which are superior to those of blends of styrene/MA copolymers and polyamides which have been rubber-toughened prior to blending, a styrene/MA copolymer containing 6 weight percent anhydride was blended with ZYTEL® 800 using the same conditions used in examples 1-3. This material is a rubber-toughened nylon-6,6 sold commercially by E.I. duPont de Nemours & Company. The ZYTEL® 800 contains ca. 20 weight percent rubber, thus the amount of rubber in the final polyblend was comparable to that of Example 1 (14 weight percent). The tensile and flexural properties of this blend (Table I) were somewhat worse than those of the polyblend of Example 1, with the distortion temperature upper limit also being inferior. The impact properties, particularly with respect to penetration impact, were significantly lower when the polyamide was rubber-modified prior to blending.

These examples show that the polyblends of this invention provide moldable thermoplastics suitable for use as engineering resins, having high mechanical strength, high stiffness, high heat distortion temperatures, high oxidative stability low moisture absorption, and good toughness and impact strength. The unblended individual components of the polyblends of this invention do not possess the desirable combination of properties exhibited by the polyblends.

TABLE I

| EXAMPLE NO. | % IMPACT MODIFIER | % MA | 1[1] | 2[1] | 3[2] | 4[2] | 5[2] | 6[2] | 7[2] |
|---|---|---|---|---|---|---|---|---|---|
| ZYTEL® 101 | 0 | --- | 56. | 56. | 56. | 100 | 75. | 75. | --- |
| STYRENE/MA COPOLYMER A | 20 | 13 | --- | --- | 30. | --- | 25. | --- | --- |
| STYRENE/MA COPOLYMER B | 15 | 7 | --- | 30. | --- | --- | --- | 25. | --- |
| STYRENE/MA COPOLYMER C | 0 | 6 | 30. | --- | --- | --- | --- | --- | 30. |
| X465A | | | 14. | 14. | 14. | --- | --- | --- | --- |
| ZYTEL® 800 | 20 | --- | --- | --- | --- | --- | --- | --- | 70. |
| | | | | | | | | | |
| TENSILE: | | | | | | | | | |
| Yield Stress MPa (ksi) | | | 59 (8.1) | 45 (6.5) | 47 (6.8) | 71 (10.3) | 64 (9.3) | >65 (>9.4) | 53 (7.7) |
| Break Strain (%) | | | 40. | 60. | 50. | 19. | 20. | 5. | 40. |
| | | | | | | | | | |
| FLEX: | | | | | | | | | |
| Modulus MPa (ksi) | | | 2344 (340) | 2020 (293) | 2116 (307) | 2951 (428) | 3034 (440) | 3006 (436) | 2234 (324) |
| Yield Stress MPa (ksi) | | | 109 (15.8) | 83 (12.0) | 87 (12.6) | 117 (17) | 128 (18.6) | 127 (18.4) | 97  14.1 |
| | | | | | | | | | |
| DTUL °C (°F) | | | 74 (165) | 64 (147) | 63 (146) | 64 (147) | 73 (163) | 70 (158) | 67 (152) |
| Notched Izod J/m (23°C) (ft lb/in(73°F)) | | | 197 (3.7) | 181 (3.4) | 117 (2.2) | 53 (1) | 64 (1.2) | 107 (2.0) | 181 (3.4) |
| | | | | | | | | | |
| PENETRATION IMPACT: | | | | | | | | | |
| Total Energy Nm (ft lb) | | | 38.5 (29.2) | 36.2 (27.4) | 32.9 (24.9) | 6.6 (5) | 2.1 (1.6) | 4.8 (3.6) | 16.1 (12.2) |
| Maximum Load Kg (lb) | | | 503 (1110) | 458 (1010) | 472 (1040) | 308 (680) | 136 (300) | 240 (530) | 404 (890.) |

1 Examples of the Invention
2 Comparative Examples
3 Broke before yielding

**Claims**

**Claims for the following Contracting States : BE, FR, GB, DE, IT, NL**

1.  A moldable thermoplastic polymer blend comprising:

    (A) from 9 to 94 weight percent of a polyamide having a number average molecular weight of at least 8,000;

    (B) from 5 to 90 weight percent of a thermoplastic copolymer of from 1 to 10 weight percent based on thermoplastic copolymer of an $\alpha,\beta$-unsaturated carboxylic acid anhydride and from 90 to 99 weight percent based on thermoplastic copolymer of an unsaturated monomer selected from monovinyl aromatic monomers and unsaturated nitriles, said thermoplastic copolymer having a number average molecular weight of at least 30,000; and

    (C) from 1 to 30 weight percent of an $\alpha,\beta$-unsaturated carboxylic acid anhydride-functionalized elastomer comprising an adduct of an $\alpha,\beta$-unsaturated carboxylic acid anhydride and an elastomeric polymer selected from:

    (a) a substantially random copolymer of ethylene, at least one $C_3$ to $C_6$ $\alpha$-olefin, and at least one nonconjugated diene,

    (b) a block copolymer wherein at least two blocks each consist essentially of recurring units of at least one monovinyl aromatic monomer and at least one other block consists essentially of recurring units of at least one conjugated diene, and wherein said other block is substantially hydrogenated such that the unsaturation level of said other block due to the units of conjugated diene therein is less than 20 percent of the original unsaturation level;

    (c) a substantially random copolymer of at least one monovinyl aromatic monomer and at least one conjugated diene, wherein said random copolymer is substantially hydrogenated such that the unsaturation level of said random copolymer is less than 20 percent of the original unsaturation level; and

    (d) a polymer of at least one conjugated diene, wherein said polymer is substantially hydrogenated such that the unsaturation level of said polymer is less than 20 percent of the original unsaturation level ;

    and wherein said polyamide is chemically grafted to said thermoplastic copolymer and said functionalized elastomer.

2.  The moldable thermoplastic polymer blend of claim 1 wherein the polyamide is selected from the group consisting of nylon-6, nylon-6,6, nylon-6,12 nylon-6,10, nylon-11, and nylon-12.

3.  The moldable thermoplastic polymer blend of claim 1 or claim 2 wherein the $\alpha,\beta$-unsaturated carboxylic acid anhydride in the thermoplastic copolymer is maleic anhydride.

4.  The moldable thermoplastic polymer blend of any one of claims 1 to 3 wherein the unsaturated monomer in the thermoplastic copolymer is styrene.

5.  The moldable thermoplastic polymer blend of claim 1 or claim 2 wherein the thermoplastic copolymer is a styrene/maleic anhydride copolymer.

6.  The moldable thermoplastic polymer blend of claim 5 wherein the styrene/maleic anhydride copolymer contains from about 1 to 10 weight percent maleic anhydride.

7.  The moldable thermoplastic polymer blend of claim 5 or claim 6 wherein the styrene/maleic anhydride copolymer is rubber-modified.

8.  The moldable thermoplastic polymer blend of any one of claims 1 to 7 wherein the $\alpha$-$\beta$-unsaturated carboxylic acid anhydride in the adduct is maleic anhydride.

9.  The moldable thermoplastic polymer blend of any one of claims 1 to 8 wherein the elastomeric polymer is selected from random copolymers of ethylene, propylene, and at least one nonconjugated diene selected from the group consisting of 1,4-hexadiene, 5-ethylidene-2-norbornene, and dicyclopentadiene; random copolymers of styrene and butadiene; polymers of butadiene, and block copolymers of styrene and butadiene.

EP 0 377 511 B1

10. A moldable thermoplastic polymer blend as claimed in claim 1 wherein said polyamide (A) is nylon 6,6 and is present in an amount of from 24 to 79 weight percent of the blend; said thermoplastic copolymer (B) comprises from 1 to 10 weight percent of maleic anhydride and from 90 to 99 weight percent of styrene and is present in an amount of from 20 to 75 weight percent of the blend; and said functionalized elastomer (C) is an adduct of maleic anhydride and an elastomeric polymer selected from

(a) random copolymers of ethylene, propylene, and at least one non-conjugated diene selected from of 1,4 hexadiene, 5-ethylidene-2-norbornene, and dicyclopentadiene;

(b) block copolymers wherein at least two blocks consist essentially of recurring units of styrene and at least one other block consists of recurring units of butadiene, and wherein said other block is substantially hydrogenated such that the unsaturation level of said other block due to the units of conjugated diene therein is less than 20 percent of the original unsaturation level;

(c) random copolymers of styrene and butadiene, wherein said random copolymer is substantially hydrogenated such that the unsaturation level of said random copolymer is less than 20 percent of the original unsaturation level; and

(d) polymers of butadiene, wherein said polymer is substantially hydrogenated such that the unsaturation level of said polymer is less than 20 percent of the original unsaturation level; and said functionalized elastomer is present in an amount of from 1 to 30 percent by weight of the blend.

11. A process for producing a moldable thermoplastic polymer blend as claimed in any one of claims 1 to 10 comprising blending said components (A), (B) and (C) at a temperature of from 240°C to 330°C.

12. A molded thermoplastic polymer blend produced by molding a moldable thermoplastic polymer blend as claimed in any one of claims 1 to 10 or obtained by the process of claim 11.

**Claims for the following Contracting State : ES**

1. A process for producing a moldable thermoplastic polymer blend comprising blending at a temperature of from 240°C to 330°C:

(A) from 9 to 94 weight percent of a polyamide having a number average molecular weight of at least 8,000;

(B) from 5 to 90 weight percent of a thermoplastic copolymer of from 1 to 10 weight percent based on thermoplastic copolymer of an $\alpha,\beta$-unsaturated carboxylic acid anhydride and from 90 to 99 weight percent based on thermoplastic copolymer of an unsaturated monomer selected from monovinyl aromatic monomers and unsaturated nitriles, said thermoplastic copolymer having a number average molecular weight of at least 30,000; and

(C) from 1 to 30 weight percent of an $\alpha,\beta$-unsaturated carboxylic acid anhydride-functionalized elastomer comprising an adduct of an $\alpha,\beta$-unsaturated carboxylic acid anhydride and an elastomeric polymer selected from

(a) a substantially random copolymer of ethylene, at least one $C_3$ to $C_6$ $\alpha$-olefin, and at least one nonconjugated diene,

(b) a block copolymer wherein at least two blocks consist essentially of recurring units of at least one monovinyl aromatic monomer and at least one other block consists essentially of recurring units of at least one conjugated diene, and wherein said other block is substantially hydrogenated such that the unsaturation level of said other block due to the units of conjugated diene therein is less than 20 percent of the original unsaturation level;

(c) a substantially random copolymer of at least one monovinyl aromatic monomer and at least one conjugated diene, wherein said random copolymer is substantially hydrogenated such that the unsaturation level of said random copolymer is less than 20 percent of the original unsaturation level; and

(d) a polymer of at least one conjugated diene, wherein said polymer is substantially hydrogenated such that the unsaturation level of said polymer is less than 20 percent of the original unsaturation level;

whereby said polyamide is chemically grafted to said thermoplastic copolymer and said functionalized elastomer

2. The process of claim 1 wherein the polyamide is selected from the group consisting of nylon-6, nylon-6,6, nylon 6,12, nylon 6,10, nylon-11, and nylon-12.

11

3. The process of claim 1 or claim 2 wherein the $\alpha,\beta$-unsaturated carboxylic acid anhydride in the thermoplastic copolymer is maleic anhydride.

4. The process of any one of claims 1 to 3 wherein the unsaturated monomer in the thermoplastic copolymer is styrene.

5. The process of claim 1 or claim 2 wherein the thermoplastic copolymer is a styrene/maleic anhydride copolymer.

6. The process of claim 5 wherein the styrene/maleic anhydride copolymer contains from about 1 to 10 weight percent maleic anhydride.

7. The process of claim 5 or claim 6 wherein the styrene/maleic anhydride copolymer is rubber-modified.

8. The process of any one claims 1 to 7 wherein the $\alpha,\beta$-unsaturated carboxylic acid anhydride in the adduct is maleic anhydride.

9. The process of any one of claims 1 to 8 wherein the elastomeric polymer is selected from random copolymers of ethylene, propylene, and at least one nonconjugated diene selected from the group consisting of 1,4-hexadiene, 5-ethylidene-2-norbornene, and dicyclopentadiene; random copolymers of styrene and butadiene; polymers of butadiene, and block copolymers of styrene and butadiene.

10. The process of claim 1 wherein:
(A) comprises from 24 to 79 weight percent of nylon-6,6;
(B) comprises from 20 to 75 weight percent of a thermoplastic copolymer comprised of from 1 to 10 weight percent based on thermoplastic copolymer of maleic anhydride and from 90 to 99 weight percent based on thermoplastic copolymer of styrene, and
(C) comprises from 1 to 30 weight percent of a functionalized elastomer which is an adduct of maleic anhydride and an elastomeric polymer selected from the group consisting of:
(a) a random copolymer of ethylene, propylene, and at least one nonconjugated diene selected from the group consisting of 1,4-hexadiene, 5-ethylidene-2-norbornene, and dicyclopentadiene;
(b) a block copolymer wherein at least two blocks consist essentially of recurring units of styrene and at least one other block consists of recurring units of butadiene, and wherein said other block is substantially hydrogenated such that the unsaturation level of said other block due to the units of conjugated diene therein is less than 20 percent of the original unsaturation level;
(c) a random copolymer of styrene and butadiene, wherein said random copolymer is substantially hydrogenated such that the unsaturation level of said random copolymer is less than 20 percent of the original unsaturation level; and
(d) a polymer of butadiene, wherein said polymer is substantially hydrogenated such that the unsaturation level of said polymer is less than 20 percent of the original unsaturation level; wherein said nylon-6,6 is chemically grafted to said thermoplastic copolymer and said functionalized elastomer.

11. A method of forming a molded thermoplastic polymer blend, said method comprising molding a blend obtained by a process as claimed in any one of claims 1 to 10.

**Patentansprüche**
**Patentansprüche für folgende Vertragsstaaten : BE, FR, GB, DE, IT, NL**

1. Formbares, thermoplastisches Polymergemisch unter Einbeziehung der folgenden Bestandteile:
(A) zwischen 9 und 94 Gew.-% eines Polyamids mit einem durchschnittlichen zahlenmäßigen Molekulargewicht von mindestens 8000,
(B) zwischen 5 und 90 Gew.-% eines thermoplastischen Copolymer, welches auf einem thermoplastischen Copolymer eines $\alpha,\beta$-ungesättigten Carbonsäureanhydrids in einer Menge zwischen 1 und 10 Gew.-% sowie auf einem thermoplastischen Copolymer eines ungesättigten Monomeren in einer Menge zwischen 90 und 99 Gew.-% basiert, wobei das Monomer aus aromatischen Monovinylmonomeren und ungesättigten Nitrilen ausgewählt ist und das thermoplastische Copolymer ein durchschnittliches zahlenmäßiges Molekulargewicht von mindestens 30 000 aufweist, sowie

12

EP 0 377 511 B1

(C) zwischen 1 und 30 Gew.-% eines mittels eines $\alpha,\beta$-ungesättigten Carbonsäureanhydrids funktionalisierten Elastomers, welches ein Addukt eines $\alpha,\beta$-ungesättigten Carbonsäureanhydrids und eines elastomeren Polymeren darstellt und aus den folgenden Komponenten ausgewählt ist:

(a) einem im wesentlichen randomisierten Copolymer von Ethylen, mindestens einem $C_3$-$C_6$-$\alpha$-Olefin sowie mindestens einem nichtkonjugierten Dien,

(b) einem Blockcopolymer, in dem mindestens zwei Blöcke jeweils im wesentlichen aus wiederkehrenden Einheiten mindestens eines aromatischen Monovinylmonomers bestehen und mindestens ein weiterer Block, welcher sich im wesentlichen aus wiederkehrenden Einheiten mindestens eines konjugierten Diens zusammensetzt und in welchem der zusätzliche Block im wesentlichen hydriert ist, so daß der Grad an Nichtsättigung des zusätzlichen Blocks aufgrund der konjugierten Dieneinheiten weniger als 20 % des ursprünglichen Nichtsättigungsgrades ausmacht,

(c) einem im wesentlichen randomisierten Copolymer mindestens eines aromatischen Monovinylmonomers und mindestens eines konjugierten Diens, bei dem das randomisierte Copolymer im wesentlichen so hydriert ist, daß der Grad an Nichtsättigung in dem randomisierten Copolymer weniger als 20 % des ursprünglichen Grades an Nichtsättigung ausmacht, sowie

(d) einem Polymer aus mindestens einem konjugierten Dien, worin das Polymer im wesentlichen so hydriert ist, daß der Grad an Unsättigung in dem Polymer weniger als 20 % im Vergleich zum ursprünglichen Grad an Nichtsättigung beträgt,

und worin das Polyamid auf das thermoplastische Copolymer und funktionalisierte Elastomer aufgepfropft ist.

2. Formbares, thermoplastisches Polymergemisch gemäß Anspruch 1, in welchem das Polyamid aus der aus Nylon-6, Nylon-6,6, Nylon-6,12, Nylon-6,10, Nylon-11 sowie Nylon-12 bestehenden Gruppe ausgewählt ist.

3. Formbares, thermoplastisches Polymergemisch gemäß Anspruch 1 oder 2, in welchem das $\alpha,\beta$-ungesättigte Carbonsäureanhydrid in dem thermoplastischen Copolymer die Maleinsäure darstellt.

4. Formbares, thermoplastisches Polymergemisch gemäß einem der Ansprüche 1 bis 3, in welchem das ungesättigte Monomer in dem thermoplastischen Copolymer Styrol darstellt.

5. Formbares, thermoplastisches Polymergemisch gemäß Anspruch 1 oder 2, in welchem das thermoplastische Copolymer ein Styrol/Maleinsäureanhydrid-Copolymer darstellt.

6. Formbares, thermoplastisches Polymergemisch gemäß Anspruch 5, in welchem das Styrol/Maleinsäureanhydrid-Copolymer zwischen etwa 1 und 10 Gew.-% Maleinsäureanhydrid enthält.

7. Formbares, thermoplastisches Polymergemisch gemäß Anspruch 5 oder 6, in welchem das Styrol/Maleinsäureanhydrid-Copolymer in gummimodifizierter Form vorliegt.

8. Formbares, thermoplastisches Polymergemisch gemäß einem der Ansprüche 1 bis 7, in welchem das $\alpha,\beta$-ungesättigte Carbonsäureanhydrid in dem Addukt in Form von Maleinsäureanhydrid vorliegt.

9. Formbares, thermoplastisches Polymergemisch gemäß einem der Ansprüche 1 bis 8, in welchem das elastomere Polymer aus randomisierten Copolymeren von Ethylen, Propylen und mindestens einem nichtkonjugierten Dien ausgewählt ist, welches wiederum aus der aus 1,4-Hexadien, 5-Ethyliden-2-norbornen und Dicyclopentadien bestehenden Gruppe ausgewählt ist, oder das elastomere Polymer aus randomisierten Copolymeren aus Styrol und Butadien, Polymeren des Butadiens, und Blockcopolymeren aus Styrol und Butadien ausgewählt ist.

10. Formbares, thermoplastisches Polymergemisch gemäß Anspruch 1, in welchem das Polyamid (A) Nylon-6,6 darstellt und in einer Menge zwischen 24 und 79 Gew.-% der Mischung vorhanden ist, wobei das thermoplastische Copolymer (B) zwischen 1 und 10 Gew-% Maleinsäureanhydrid sowie zwischen 90 und 99 Gew.-% Styrol umfaßt und in einer Menge zwischen 20 und 75 Gew.-% des Gemisches vorhanden ist, wobei das funktionalisierte Elastomer (C) ein Addukt aus Maleinsäureanhydrid und einem elastomeren Polymer darstellt, welches aus den folgenden Verbindungen ausgewählt ist:

13

(a) randomisierten Copolymeren von Ethylen, Propylen und mindestens einem nichtkonjugierten Dien aus der Reihe 1,4-Hexadien, 5-Ethyliden-2-norbornen und Dicyclopentadien;

(b) Blockcopolymeren, in welchen mindestens zwei Blöcke im wesentlichen aus wiederkehrenden Einheiten aus Styrol bestehen und aus mindestens einem weiteren Block, welcher sich aus wiederkehrenden Einheiten aus Butadien zusammensetzt, und in welchen der zusätzliche Block im wesentlichen so hydriert ist, daß der Grad an Unsättigung des Zusatzblockes aufgrund der konjugierten Dieneinheiten darin weniger als 20 % im Vergleich zum ursprünglichen Nichtsättigungsgrad beträgt,

(c) randomisierten Copolymeren aus Styrol und Butadien, worin das randomisierte Copolymer im wesentlichen so hydriert ist, daß der Grad an Nichtsättigung in dem randomisierten Copolymer weniger als 20 % im Vergleich zum ursprünglichen Nichtsättigungsgrad ist, sowie

(d) Polymeren aus Butadien, in welchen das Polymer im wesentlichen so hydriert ist, daß der Grad an Nichtsättigung in dem Polymer weniger als 20 % im Vergleich zum ursprünglichen Grad an Nichtsättigung beträgt, und wobei das funktionalisierte Elastomer in einer Menge zwischen 1 und 30 Gew.-% in bezug auf das Gemisch vorhanden ist.

11. Verfahren zur Herstellung eines formbaren, thermoplastischen Polymergemisches gemäß einem der Ansprüche 1 bis 10, welches das Vermischen der Bestandteile (A), (B) und (C) bei einer Temperatur zwischen 240 °C und 330 °C umfaßt.

12. Formbares, thermoplastisches Polymergemisch, welches durch Formpressen eines formbaren thermoplastischen Polymergemisches gemäß einem der Ansprüche 1 bis 10 hergestellt oder mittels des Verfahrens gemäß Anspruch 11 erhalten wird.

**Patentansprüche für folgenden Vertragsstaat : ES**

1. Verfahren zur Herstellung eines formbaren, thermoplastischen Polymergemisches, welches das Vermischen der folgenden Bestandteile bei einer Temperatur zwischen 240 °C und 330 °C umfaßt:

(A) zwischen 9 und 94 Gew.-% eines Polyamids mit einem durchschnittlichen zahlenmäßigen Molekulargewicht von mindestens 8000,

(B) zwischen 5 und 90 Gew.-% eines thermoplastischen Copolymer, welches auf einem thermoplastischen Copolymer eines $\alpha,\beta$-ungesättigten Carbonsäureanhydrids in einer Menge zwischen 1 und 10 Gew.-% sowie auf einem thermoplastischen Copolymer eines ungesättigten Monomeren in einer Menge zwischen 90 und 99 Gew.-% basiert, wobei das Monomer aus aromatischen Monovinylmonomeren und ungesättigten Nitrilen ausgewählt ist und das thermoplastische Copolymer ein durchschnittliches zahlenmäßiges Molekulargewicht von mindestens 30 000 aufweist, sowie

(C) zwischen 1 und 30 Gew.-% eines mittels eines $\alpha,\beta$-ungesättigten Carbonsäureanhydrids funktionalisierten Elastomers, welches ein Addukt eines $\alpha,\beta$-ungesättigten Carbonsäureanhydrids und eines elastomeren Polymeren darstellt und aus den folgenden Komponenten ausgewählt ist:

(a) einem im wesentlichen randomisierten Copolymer von Ethylen, mindestens einem $C_3$-$C_6$-$\alpha$-Olefin sowie mindestens einem nichtkonjugierten Dien,

(b) einem Blockcopolymer, in dem mindestens zwei Blöcke jeweils im wesentlichen aus wiederkehrenden Einheiten mindestens eines aromatischen Monovinylmonomers bestehen und mindestens ein weiterer Block, welcher sich im wesentlichen aus wiederkehrenden Einheiten mindestens eines konjugierten Diens zusammensetzt und in welchem der zusätzliche Block im wesentlichen hydriert ist, so daß der Grad an Nichtsättigung des zusätzlichen Blocks aufgrund der konjugierten Dieneinheiten weniger als 20 % des ursprünglichen Nichtsättigungsgrades ausmacht,

(c) einem im wesentlichen randomisierten Copolymer mindestens eines aromatischen Monovinylmonomers und mindestens eines konjugierten Diens, bei dem das randomisierte Copolymer im wesentlichen so hydriert ist, daß der Grad an Nichtsättigung in dem randomisierten Copolymer weniger als 20 % des ursprünglichen Grades an Nichtsättigung ausmacht, sowie

(d) einem Polymer aus mindestens einem konjugierten Dien, worin das Polymer im wesentlichen so hydriert ist, daß der Grad an Unsättigung in dem Polymer weniger als 20 % im Vergleich zum ursprünglichen Grad an Nichtsättigung beträgt,

und worin das Polyamid auf das thermoplastische Copolymer und funktionalisierte Elastomer aufgepfropft ist.

14

2. Verfahren gemäß Anspruch 1, bei dem das Polyamid aus der aus Nylon-6, Nylon-6,6, Nylon-6,12, Nylon-6,10, Nylon-11 sowie Nylon-12 bestehenden Gruppe ausgewählt ist.

3. Verfahren gemäß Anspruch 1 oder 2, bei dem das $\alpha,\beta$-ungesättigte Carbonsäureanhydrid in dem thermoplastischen Copolymer die Maleinsäure darstellt.

4. Verfahren gemäß einem der Ansprüche 1 bis 3, bei dem das ungesättigte Monomer in dem thermoplastischen Copolymer Styrol darstellt.

5. Verfahren gemäß Anspruch 1 oder 2, bei dem das thermoplastische Copolymer ein Styrol/Maleinsäureanhydrid-Copolymer darstellt.

6. Verfahren gemäß Anspruch 5, bei dem das Styrol/Maleinsäureanhydrid-Copolymer zwischen etwa 1 und 10 Gew.-% Maleinsäureanhydrid enthält.

7. Verfahren gemäß Anspruch 5 oder 6, bei dem das Styrol/Maleinsäureanhydrid-Copolymer in gummimodifizierter Form vorliegt.

8. Verfahren gemäß einem der Ansprüche 1 bis 7, bei dem das $\alpha,\beta$-ungesättigte Carbonsäureanhydrid in dem Addukt in Form von Maleinsäureanhydrid vorliegt.

9. Verfahren gemäß einem der Ansprüche 1 bis 8, bei dem das elastomere Polymer aus randomisierten Copolymeren von Ethylen, Propylen und mindestens einem nichtkonjugierten Dien ausgewählt ist, welches wiederum aus der aus 1,4-Hexadien, 5-Ethyliden-2-norbornen und Dicyclopentadien bestehenden Gruppe ausgewählt ist, oder das elastomere Polymer aus randomisierten Copolymeren aus Styrol und Butadien, Polymeren des Butadiens, und Blockcopolymeren aus Styrol und Butadien ausgewählt ist.

10. Verfahren gemäß Anspruch 1, bei dem
   (A) zwischen 24 und 79 Gew.-% Nylon-6,6 umfaßt,
   (B) zwischen 20 und 75 Gew.-% eines thermoplastischen Copolymers enthält, welches zwischen 1 und 10 Gew.-% eines thermoplastischen Copolymers auf Basis von Maleinsäureanhydrid sowie zwischen 90 und 99 Gew-% eines auf Styrol basierenden thermoplastischen Copolymers umfaßt, sowie
   (C) zwischen 1 und 30 Gew.-% eines funktionalisierten Elastomers enthält, welches ein Addukt aus Maleinsäureanhydrid und einem aus der folgenden Gruppe ausgewählten Elastomeren darstellt, wobei die Gruppe aus den folgenden Bestandteilen besteht:
      (a) einem randomisierten Copolymer von Ethylen, Propylen und mindestens einem aus der Reihe 1,4-Hexadien, 5-Ethyliden-2-norbornen und Dicyclopentadien ausgewählten nichtkonjugierten Dien;
      (b) einem Blockcopolymer, in welchem mindestens zwei Blöcke im wesentlichen aus wiederkehrenden Einheiten aus Styrol bestehen und sich mindestens ein weiterer Block aus wiederkehrenden Einheiten aus Butadien zusammensetzt, und in welchem der zusätzliche Block im wesentlichen so hydriert ist, daß der Grad an Unsättigung des Zusatzblocks aufgrund der konjugierten Dieneinheiten darin weniger als 20 % im Vergleich zum ursprünglichen Nichtsättigungsgrad beträgt,
      (c) einem randomisierten Copolymer aus Styrol und Butadien, worin das randomisierte Copolymer im wesentlichen so hydriert ist, daß der Grad an Nichtsättigung in dem randomisierten Copolymer weniger als 20 % im Vergleich zum ursprünglichen Nichtsättigungsgrad ist, sowie
      (d) einem Butadienpolymer, in welchem das Polymer im wesentlichen so hydriert ist, daß der Grad an Nichtsättigung in dem Polymer weniger als 20 % des ursprünglichen Nichtsättigungsgrades ausmacht, und worin das Nylon-6,6 auf das thermoplastische Copolymer und funktionalisierte Elastomer chemisch aufgepfropft ist.

11. Verfahren zur Formung eines thermoplastischen Polymerformgemisches, wobei das Verfahren das Formen eines Gemisches umfaßt, welches durch den in einem der Ansprüche 1 bis 10 beanspruchten Prozeß erhalten wird.

## EP 0 377 511 B1

**Revendications**
**Revendications pour les Etats contractants suivants : BE, FR, GB, DE, IT, NE**

1. Mélange thermoplastique de polymères à mouler comprenant :

   (A) de 9 à 94% en poids d'un polyamide ayant un poids moléculaire moyen en nombre d'au moins 8.000;

   (B) de 5 à 90% en poids d'un copolymère thermoplastique comprenant de 1 à 10% en poids par rapport au copolymère thermoplastique d'un anhydride d'acide carboxylique α,β-insaturé et de 90 à 99% en poids par rapport au copolymère thermoplastique d'un monomère insaturé choisi parmi des monomères monovinylaromatiques et des nitriles insaturés, ce copolymère thermoplastique ayant un poids moléculaire moyen en nombre d'au moins 30.000; et

   (C) de 1 à 30% en poids d'un élastomère fonctionnalisé par un anhydride d'acide carboxylique α,β-insaturé comprenant un adduct d'un anhydride d'acide carboxylique α,β-insaturé et d'un polymère élastomère choisi parmi :

   (a) un copolymère pratiquement statistique d'éthylène, d'au moins une α-oléfine en $C_{3-6}$ et d'au moins un diène non conjugué,

   (b) un copolymère séquencé dans lequel au moins deux blocs consistent chacun essentiellement en unités récurrentes d'au moins un monomère monovinyl-aromatique et au moins un autre bloc consiste essentiellement en unités récurrentes d'au moins un diène conjugué, et dans lequel cet autre bloc est notablement hydrogéné de telle sorte que le taux d'insaturation de cet autre bloc dû aux unités de diène conjugué qu'il contient, est inférieur à 20% du taux d'insaturation d'origine;

   (c) un copolymère pratiquement statistique d'au moins un monomère monovinyl-aromatique et d'au moins un diène conjugué, dans lequel ce copolymère statistique est notablement hydrogéné de telle sorte que le taux d'insaturation de ce copolymère statistique est inférieur à 20% du taux d'insaturation d'origine;

   (d) un polymère d'au moins un diène conjugué, dans lequel ce polymère est notablement hydrogéné de telle sorte que le taux d'insaturation de ce copolymère est inférieur à 20% du taux d'insaturation d'origine;

   et dans lequel ce polyamide est greffé chimiquement à ce copolymère thermoplastique et à cet élastomère fonctionnalisé.

2. Mélange thermoplastique de polymères à mouler suivant la revendication 1, dans lequel le polyamide est choisi dans le groupe consistant en nylon-6, nylon-6,6, nylon-6,12, nylon 6,10, nylon-11 et nylon-12.

3. Mélange thermoplastique de polymères à mouler suivant les revendications 1 ou 2, dans lequel l'anhydride d'acide carboxylique α,β-insaturé dans le copolymère thermoplastique, est l'anhydride maléique.

4. Mélange thermoplastique de polymères à mouler suivant l'une quelconque des revendications 1 à 3, dans lequel le monomère insaturé dans le copolymère thermoplastique est le styrène.

5. Mélange thermoplastique de polymères à mouler suivant les revendications 1 ou 2, dans lequel le copolymère thermoplastique est un copolymère de styrène et d'anhydride maléique.

6. Mélange thermoplastique de polymères à mouler suivant la revendication 5, dans lequel le copolymère de styrène et d'anhydride maléique contient d'environ 1 à 10% en poids d'anhydride maléique.

7. Mélange thermoplastique de polymères à mouler suivant les revendications 5 ou 6, dans lequel le copolymère de styrène et d'anhydride maléique est modifié par un caoutchouc.

8. Mélange thermoplastique de polymères à mouler suivant l'une quelconque des revendications 1 à 7, dans lequel l'anhydride d'acide carboxylique α,β-insaturé dans l'adduct, est l'anhydride maléique.

9. Mélange thermoplastique de polymères à mouler suivant l'une quelconque des revendications 1 à 8, dans lequel le polymère élastomère est choisi parmi des copolymères statistiques d'éthylène, de propylène et d'au moins un diène non conjugué choisi dans le groupe consistant en 1,4-hexadiène, 5-éthylidène-norbornène et dicyclopentadiène; des copolymères statistiques de styrène et de butadiène;

16

EP 0 377 511 B1

des polymères de butadiène et des copolymères séquencés de styrène et de butadiène.

10. Mélange thermoplastique de polymères à mouler suivant la revendication 1, dans lequel ce polyamide (A) est du nylon-6,6 et est présent en une quantité de 24 à 79% en poids du mélange; ce copolymère thermoplastique (B) comprend de 1 à 10% en poids d'anhydride maléique et de 90 à 99% en poids de styrène et est présent en une quantité de 20 à 75% en poids du mélange; et cet élastomère fonctionnalisé (C) est un adduct d'anhydride maléique et d'un polymère élastomère choisi parmi :

(a) des copolymères statistiques d'éthylène, de propylène et d'au moins un diène non conjugué choisi parmi le 1,4-hexadiène, le 5-éthylidène-2-norbornène et le dicyclopentadiène;

(b) des copolymères séquencés dans lesquels au moins deux blocs consistent essentiellement en unités récurrentes de styrène et au moins un autre bloc consiste en unités récurrentes de butadiène, et dans lesquels cet autre bloc est notablement hydrogéné de telle sorte que le taux d'insaturation de cet autre bloc dû aux unités de diène conjugué qu'il contient, est inférieur à 20% du taux d'insaturation d'origine;

(c) des copolymères statistiques de styrène et de butadiène, dans lesquels ce copolymère statistique est notablement hydrogéné de telle sorte que le taux d'insaturation de ce copolymère statistique est inférieur à 20% du taux d'insaturation d'origine;

(d) des polymères de butadiène, dans lesquels ce polymère est notablement hydrogéné de telle sorte que le taux d'insaturation de ce copolymère est inférieur à 20% du taux d'insaturation d'origine;

et cet élastomère fonctionnalisé est présent en une quantité de 1 à 30% en poids du mélange.

11. Procédé pour la production d'un mélange thermoplastique de polymères à mouler suivant l'une quelconque des revendications 1 à 10, comprenant le mélange de ces composants (A), (B) et (c) à une température comprise entre 240°C et 330°C.

12. Mélange thermoplastique de polymères moulé produit par moulage d'un mélange thermoplastique de polymères à mouler suivant l'une quelconque des revendications 1 à 10 ou obtenu par le procédé suivant la revendication 11.

**Revendications pour l'Etat contractant suivant : ES**

1. Procédé pour la production d'un mélange thermoplastique de polymères à mouler comprenant le mélange à une température comprise entre 240°C et 330°C :

(A) de 9 à 94% en poids d'un polyamide ayant un poids moléculaire moyen en nombre d'au moins 8.000;

(B) de 5 à 90% en poids d'un copolymère thermoplastique comprenant de 1 à 10% en poids par rapport au copolymère thermoplastique d'un anhydride d'acide carboxylique $\alpha,\beta$-insaturé et de 90 à 99% en poids par rapport au copolymère thermoplastique d'un monomère insaturé choisi parmi des monomères monovinylaromatiques et des nitriles insaturés, ce copolymère thermoplastique ayant un poids moléculaire moyen en nombre d'au moins 30.000; et

(C) de 1 à 30% en poids d'un élastomère fonctionnalisé par un anhydride d'acide carboxylique $\alpha,\beta$-insaturé comprenant un adduct d'un anhydride d'acide carboxylique $\alpha,\beta$-insaturé et d'un polymère élastomère choisi parmi :

(a) un copolymère pratiquement statistique d'éthylène, d'au moins une $\alpha$-oléfine en $C_{3-6}$ et d'au moins un diène non conjugué,

(b) un copolymère séquencé dans lequel au moins deux blocs consistent chacun essentiellement en unités récurrentes d'au moins un monomère monovinyl-aromatique et au moins un autre bloc consiste essentiellement en unités récurrentes d'au moins un diène conjugué, et dans lequel cet autre bloc est notablement hydrogéné de telle sorte que le taux d'insaturation de cet autre bloc dû aux unités de diène conjugué qu'il contient, est inférieur à 20% du taux d'insaturation d'origine;

(c) un copolymère pratiquement statistique d'au moins un monomère monovinyl-aromatique et d'au moins un diène conjugué, dans lequel ce copolymère statistique est notablement hydrogéné de telle sorte que le taux d'insaturation de ce copolymère statistique est inférieur à 20% du taux d'insaturation d'origine;

(d) un polymère d'au moins un diène conjugué, dans lequel ce polymère est notablement hydrogéné de telle sorte que le taux d'insaturation de ce copolymère est inférieur à 20% du taux

17

d'insaturation d'origine;

de telle sorte que ce polyamide est greffé chimiquement à ce copolymère thermoplastique et à cet élastomère fonctionnalisé.

2. Procédé suivant la revendication 1, dans lequel le polyamide est choisi dans le groupe consistant en nylon-6, nylon-6,6, nylon-6,12, nylon 6,10, nylon-11 et nylon-12.

3. Procédé suivant les revendications 1 ou 2, dans lequel l'anhydride d'acide carboxylique $\alpha,\beta$-insaturé dans le copolymère thermoplastique, est l'anhydride maléique.

4. Procédé suivant l'une quelconque des revendications 1 à 3, dans lequel le monomère insaturé dans le copolymère thermoplastique est le styrène.

5. Procédé suivant les revendications 1 ou 2, dans lequel le copolymère thermoplastique est un copolymère de styrène et d'anhydride maléique.

6. Procédé suivant la revendication 5, dans lequel le copolymère de styrène et d'anhydride maléique contient d'environ 1 à 10% en poids d'anhydride maléique.

7. Procédé suivant les revendications 5 ou 6, dans lequel le copolymère de styrène et d'anhydride maléique est modifié par un caoutchouc.

8. Procédé suivant l'une quelconque des revendications 1 à 7, dans lequel l'anhydride d'acide carboxylique $\alpha,\beta$-insaturé dans l'adduct, est l'anhydride maléique.

9. Procédé suivant l'une quelconque des revendications 1 à 8, dans lequel le polymère élastomère est choisi parmi des copolymères statistiques d'éthylène, de propylène et d'au moins un diène non conjugué choisi dans le groupe consistant en 1,4-hexadiène, 5-éthylidène-norbornène et dicyclopentadiène; des copolymères statistiques de styrène et de butadiène; des polymères de butadiène et des copolymères séquencés de styrène et de butadiène.

10. Procédé suivant la revendication 1, dans lequel :

(A) comprend de 24 à 79% en poids de nylon-6,6;

(B) comprend 20 à 75% en poids d'un copolymère thermoplastique composé de 1 à 10% en poids d'anhydride maléique par rapport au copolymère thermoplastique et de 90 à 99% en poids de styrène par rapport au copolymère thermoplastique:

(C) comprend de 1 à 30% en poids d'un élastomère fonctionnalisé qui est un adduct d'anhydride maléique et d'un polymère élastomère choisi parmi :

(a) un copolymère statistique d'éthylène, de propylène et d'au moins un diène non conjugué choisi parmi le 1,4-hexadiène, le 5-éthylidène-2-norbornène et le dicyclopentadiène;

(b) un copolymère séquencé dans lequel au moins deux blocs consistent essentiellement en unités récurrentes de styrène et au moins un autre bloc consiste en unités récurrentes de butadiène, et dans lequel cet autre bloc est notablement hydrogéné de telle sorte que le taux d'insaturation de cet autre bloc dû aux unités de diène conjugué qu'il contient, est inférieur à 20% du taux d'insaturation d'origine;

(c) un copolymère statistique de styrène et de butadiène, dans lequel ce copolymère statistique est notablement hydrogéné de telle sorte que le taux d'insaturation de ce copolymère statistique est inférieur à 20% du taux d'insaturation d'origine;

(d) un polymère de butadiène, dans lequel ce polymère est notablement hydrogéné de telle sorte que le taux d'insaturation de ce copolymère est inférieur à 20% du taux d'insaturation d'origine; dans lequel ce nylon-6,6 ets chimiquement greffé à ce copolymère thermoplastique et à cet élastomère fonctionnalisé.

11. Procédé pour la formation d'un mélange thermoplastique de polymères moulé, comprenant le moulage d'un mélange obtenu par un procédé suivant l'une quelconque des revendications 1 à 10.